# EUROPÄISCHE PATENTSCHRIFT

(11) **EP 0 597 177 B1**
(45) Veröffentlichungstag und Bekanntmachung des Hinweises auf die Patenterteilung: **04.12.1996**
(21) Anmeldenummer: 93108828.0
(22) Anmeldetag: 02.06.1993
(51) Int. Cl.: F16K 3/20, F16K 25/00

(54) **Absperrschieber für Gasleitungen**
Gate valve for gas conduits
Vanne d'arrêt pour canalisations de gaz

(30) Priorität: 17.09.1992 DE 9212505 U
(43) Veröffentlichungstag der Anmeldung: 18.05.1994
(73) Patentinhaber: P+S ARMATUREN GmbH, 66482 Zweibrücken (DE)
(72) Erfinder: Conzelmann, Dieter, Ing. grad., W-6660 Zweibrücken (DE)
(74) Vertreter: Patentanwälte Möll und Bitterich

(56) Entgegenhaltungen:
- WO-A-86/04658
- AT-B- 258 661
- DE-C- 1 116 003
- DE-U- 1 728 264
- DE-U- 7 903 670
- DE-U- 8 800 776
- FR-A- 1 379 789
- GB-A- 855 118
- US-A- 3 696 831
- US-A- 4 335 733

## Beschreibung

Die Erfindung betrifft Absperrschieber für Gasleitungen gemäß dem Oberbegriff des Anspruchs 1.

In früheren Zeiten standen Absperreinrichtungen in Gas- und Wasserrohren nicht im besten Ruf. Der Grund dafür waren Ansammlungen von Rost und Kalk im Schiebersack von Wasserschiebern alter Bauart, die den dichten Verschluß der Schieber im Wasserrohrnetz verhinderten. Hoher Wasserdampfgehalt und Spuren von Sauerstoff führten in vielen Gasrohrnetzen zum großflächigen Anrosten der Stahlrohre. Der abfallende Rost wurde im Gasstrom bewegt und zu feinem Staub zermahlen und blieb schließlich im Schiebersack liegen, verfestigte sich und konnte auch beim sogenannten Staubsackschieber nicht mehr ausgeblasen werden.

In Klappenschiebern wurden die Dichtringe von harten, fest haftenden Ablagerungen im Wasserrohrnetz zerkratzt. Im Gasrohrnetz behinderte der Staub den Schließvorgang. Dies führte dazu, daß in Gasrohrnetzen nur der infolge seiner Einfachheit nicht störanfällige Absperrtopf den Anforderungen des täglichen Betriebs genügte, dessen Einsatz jedoch auf Netze mit sehr niedrigem Innendruck beschränkt war. Für Wasserrohrnetze gab es lange Zeit überhaupt keine zuverlässig schließenden Absperreinrichtungen.

Für Gasrohrnetze bahnbrechend war die Entwicklung der Einplattenschieber und insbesondere der Dreiplattenschieber um 1950.

Beim Einplattenschieber wird eine gelochte Platte parallel zu zwei Dichtringen geschoben und gezogen. Beim Schließen gleitet das Loch aus dem freien Querschnitt: die Platte sperrt. Im offenen und im geschlossenen Zustand werden die polierten Dichtflächen und die empfindlichen Dichtungen nicht mit Staub beschossen, ähnlich wie beim Kugelhahn. Während des Öffnens und Schließens können jedoch die im Gasstrom rasch bewegten Teilchen Die Dichtelemente und Dichtflächen beschädigen. Der Einplattenschieber dichtet in der Regel eingangsseitig.

Beim Dreiplattenschieber gleitet die gelochte und beidseitig planeben bearbeitete Schieberplatte parallel und spaltfrei zwischen zwei einseitig planeben bearbeiteten Seitenplatten. Diese Anordnung bietet den Vorteil, daß - anders als beim Einplattenschieber - der Dichtring nicht über die Dichtflächen gezogen und dabei durch schnell bewegte Teilchen gefährdet wird. Die erforderliche Anpreßkraft erzeugen auf Druck vorgespannte Federn. Abdichtend wirkt ein hauchdünner Ölfilm zwischen den drei metallischen Platten.

Um diese Abdichtung über Jahrzehnte sicherzustellen, wird das gesamte Schiebergehäuse mit Öl gefüllt. Da ein Ölfilm kleinste Gasmengen durchkriechen läßt, baut sich im Schiebergehäuse langsam der in der Leitung anstehende Druck auf. Wird nun der Schieber geschlossen, drückt der auf der Zuströmseite (Eingangsseite) anstehende Gasdruck die Absperrplatte und mit ihr die beiden Seitenplatten zur Abströmseite (Ausgangsseite) hin. Dadurch werden die dortigen Druckfedern mehr gespannt. Zu der Erhöhung des Anpreßdrucks zwischen Absperrplatte und abströmseitiger Seitenplatte addiert sich noch der Gehäuseinnendruck. Diese Effekte führen zu der nunmehr seit Jahrzehnten bekannten Dichtigkeit und Betriebssicherheit der Dreiplattenschieber, die ohne elastische Dichtungen auskommen. Der Dreiplattenschieber dichtet ausgangsseitig.

Bei den handelsüblichen Dreiplattenschiebern bestehen die drei Metallplatten aus Stahl oder Gußeisen. An beiden Seitenplatten ist ein Rohrstutzen angeformt, der mit Hilfe von Dichtringen längsverschieblich in den Rohranschlußstutzen des Schiebers angeordnet ist. Aufgrund von Material und Form der metallischen Platten sind bei der Exaktheit der Oberflächenbearbeitung Grenzen gesetzt. Die handelsüblichen Schieber sind daher nur bis zu bestimmten Nennwerten und Netzdrücken einsetzbar. Eine Netzdruckerhöhung wäre nur möglich, wenn durch Verwendung stärkerer Druckfedern der Anpreßdruck zwischen den metallischen Platten erhöht würde; allerdings würden die Schieber dann sehr schwergängig und auch einem hohen Verschleiß unterliegen.

Der vorliegenden Erfindung liegt die Aufgabe zugrunde, einen Dreiplattenschieber der eingangs genannten Art dahingehend weiterzuentwickeln, daß er auch für größere Nennwerte und Drücke geeignet ist.

Diese Aufgabe wird gelöst durch einen gattungsgemäßen Absperrschieber mit den Merkmalen gemäß Kennzeichen des Anspruchs 1.

Dank der erfindungsgemäßen Konstruktion können die Vorteile des Einplattenschiebers nach dem Stand der Technik kombiniert werden mit den Vorteilen des Dreiplattenschiebers nach dem Stand der Technik. Das Gehäuse braucht nicht mehr mit Öl gefüllt zu werden. Dank der besseren Dichtwirkung des O-Rings kann die Vorspannung der Anpreßfedern reduziert werden, dadurch läßt sich die Schieberplatte leichter heben und senken und der Verschleiß zwischen den Platten geht entsprechend zurück.

Der Schieber ist nach wie vor spaltfrei, d. h. es besteht zu keiner Zeit ein direkter Durchgang von der Gasrohrleitung in das Innere des Schiebergehäuses. Die Konstruktion ist sowohl eingangsseitig als auch ausgangsseitig gasdicht.

Dank der Verwendung gesonderter Dichtstutzen können die Seitenplatten jetzt als flache Platten hergestellt werden, insbesondere aus Walzstahl. Die Oberflächen von Walzstahl lassen sich mit einfacheren Mitteln eben und porenfrei gestalten als die von Gußeisen. Durch den Verzicht auf die angegossenen bzw. angeformten Dichtstutzen lassen sich die Seitenplatten auch besser in der Oberflächenbearbeitungsmaschine aufspannen.

Da die Seitenplatten nach wie vor großflächig auf der Schieberplatte aufliegen, nehmen sie praktisch den gesamten Anpreßdruck auf. Der Dichtring, bei dem es sich gemäß einer ersten bevorzugten Ausgestaltung um einen O-Ring, gemäß einer Alternative hierzu um eine Lippenringdichtung handelt, wird nur mit relativ geringem Druck belastet.

Gemäß einer vorteilhaften Weiterbildung der Erfindung sind die Seitenplatten als flache Platten mit einer Stufenbohrung ausgebildet. In diese Stufenbohrung wird der gesonderte Dichtstutzen in der üblichen Art und Weise längsbeweglich und gasdicht eingesetzt.

Gemäß einer vorteilhaften Weiterbildung der Erfindung sind die Oberflächen von Schieberplatte und/oder Seitenplatten abriebfest beschichtet, insbesondere mit Chromnitrid, Titannitrid oder auch mit Oxidkeramik. Diese Oberflächenbeschichtungen müssen jedoch nicht nur abriebfest sondern auch porenfrei und möglichst glatt sein, um ein Austreten von Gasmolekülen zu verhindern.

Alternativ dazu besteht eine Möglichkeit der Weiterbildung darin, die Schieberplatte und/oder die Seitenplatten insgesamt aus geeigneten Werkstoffen, z. B. Keramik, herzustellen.

Eine gewisse Problematik beim Dreiplattenschieber ist die Seitenführung der Schieberplatte. Dieses Problem wird bei den handelsüblichen Konstruktionen so gelöst, daß benachbart zu den Schmalseiten der Schieberplatte in die Seitenplatten drei Führungsstifte eingesetzt werden. Dies bedingt jedoch einen nicht unerheblichen Fertigungs- und Montageaufwand.

Gemäß einer vorteilhaften Weiterbildung der Erfindung werden nunmehr anstelle dieser Seitenführungsstifte im Schiebergehäuse selbst zwei Rohre montiert, insbesondere festgeschweißt. Diese Rohre stehen nach dem Einbau der Platten parallel zu den Schmalseiten der Schieberplatte und führen diese.

Gemäß einer vorteilhaften Weiterbildung hierzu ist eines der Rohre aus dem Gehäuse herausgeführt und mit einer Verschlußschraube abgedichtet. Mit Hilfe dieses Rohres kann dann das Gehäuse entlüftet oder entwässert werden, so daß sich eine gesonderte Entleerleitung erübrigt.

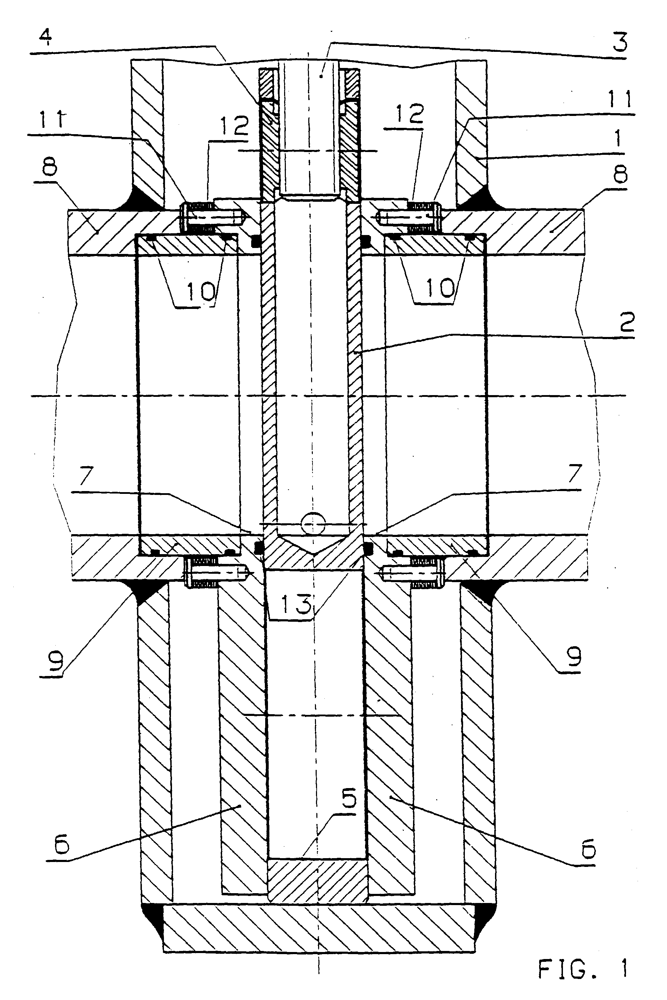

Anhand der Zeichnung soll die Erfindung in Form eines Ausführungsbeispiels näher erläutert werden. Es zeigen
- Fig. 1: ausschnittsweise einen Längsschnitt durch einen Dreiplatten-Absperrschieber und
- Fig. 2: ausschnittsweise einen um 90 Grad gedrehten Längsschnitt durch den Absperrschieber der Fig. 1.

Die Figuren zeigen ein aus Stahlblechen zusammengeschweißtes Gehäuse 1, in das eingangsseitig und ausgangsseitig Anschlußrohrstutzen 8 dicht eingeschweißt sind. Material und Abmessungen aller Konstruktionsteile sind auf Durchflußmenge und Druck des Gasrohrnetzes dimensioniert.

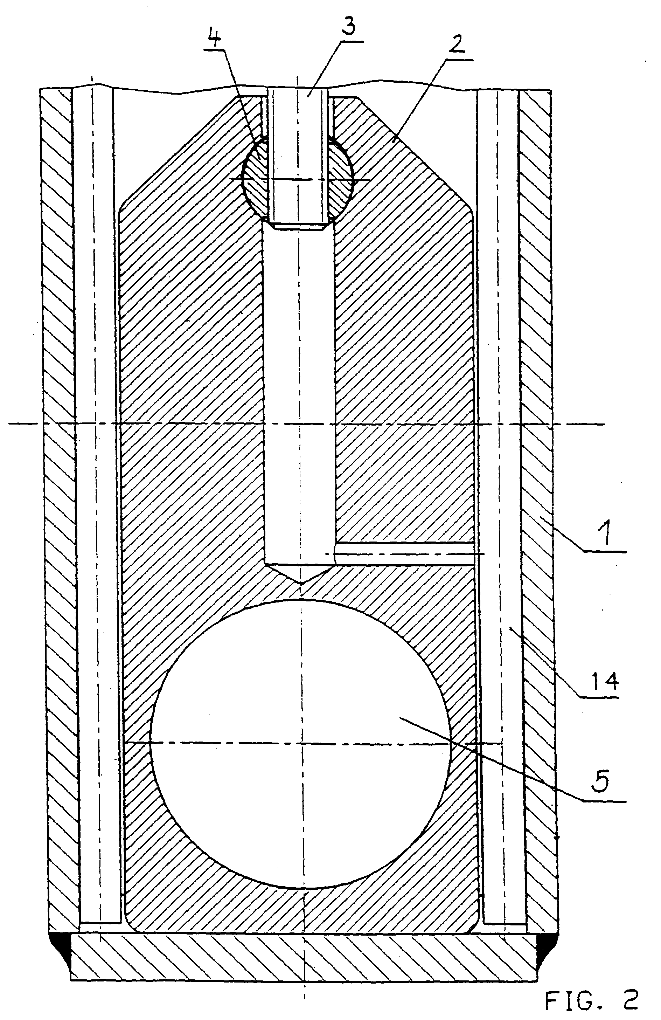

Im Zentrum des Gehäuses 1 erkennt man eine Schieberplatte 2 mit Spindel 3, die in einer Gewindebuchse 4 geführt ist, und einer Durchlaßöffnung 5. Die Schieberplatte 2 ist an ihren Schmalseiten mittels zweier in das Gehäuse 1 eingeschweißter Rohrstücke 14 geführt (Fig. 2).

An die Oberflächen der Schieberplatte 2 sind zwei Seitenplatten 6 angepreßt. Der Anpreßdruck wird erzeugt von Druckfedern 12, die sich gegen die Rohrstutzen 8 abstützen. Die Druckfedern 12 sind in Führungsbolzen 11 geführt.

Die einander zugewandten Oberflächen von Schieberplatte 2 und Seitenplatten 6 sind auf das genaueste plan bearbeitet und mit einer abriebfesten und gasdichten Beschichtung versehen.

Die druckfeste und gasdichte Verbindung zwischen den Anschlußrohrstutzen 8 und den Seitenplatten 6 stellen gesonderte Dichtstutzen 9 her, die mit Hilfe von Dichtringen 10 längsverschieblich sowohl gegen die Rohrstutzen 8 als auch gegen die Seitenplatten 6 abgedichtet sind.

Die Seitenplatten 6 besitzen in an sich bekannter Weise eine Bohrung 7 für den Gasstrom. Um diese Bohrung 7 herum ist in die der Schieberplatte 2 zugekehrte Oberfläche eine Ringnut eingestochen, in die ein Dichtring 13, im einfachsten Fall ein O-Ring, eingelegt ist. Dank dieses Dichtrings 13 ist es nicht mehr nötig, das Innere des Gehäuses 1 mit Öl zu füllen. Der Druck der Anpreßfedern 12 kann außerdem gesenkt werden, da die Dichtwirkung von elastischen Dichtringen, insbesondere von O-Ringen, ganz besonders aber auch vom Lippendichtungen, erheblich besser ist als die eines Ölfilms. Der Dichtring 13 selbst muß nur relativ geringe Kräfte aufnehmen, da der Hauptteil der Kräfte durch den großflächigen Kontakt zwischen Schieberplatte 2 und Seitenplatten 6 aufgenommen wird.

Wie aus dem Figuren zu entnehmen ist, enden die Seitenführungsrohre 14 knapp über dem Boden des Gehäuses 1. Eines dieser Rohre 14 kann aus dem Gehäuse 1 herausgeführt und mit einer Verschlußschraube abgedichtet werden. Nach Öffnen dieser Verschlußschraube kann das Innere des Gehäuses 1 entwässert oder entlüftet werden.

## Patentansprüche

1. Absperrschieber für Gasleitungen, umfassend ein Gehäuse (1), eine Schieberplatte (2) mit einer Öffnung (5), eine Spindel (3), zwei Seitenplatten (6) mit Öffnung (7), zwei Anschlußrohrstutzen (8) am Gehäuse (1), gasdichte Schiebesitze zwischen den Anschlußrohrstutzen (8) und den Seitenplatten (6) sowie Druckfedern (12), die die Seitenplatten (6) auf die Schieberplatte (2) pressen, dadurch gekennzeichnet, daß zwischen den Anschlußrohrstutzen (8) und Seitenplatten (6) ein gesonderter Dichtstutzen (9) eingesetzt ist und daß in die der Schieberplatte (2) zugewandte Oberfläche der Seitenplatten (6) um die Öffnung (7) herum eine Ringnut mit Dichtring (13) eingebracht ist.

2. Absperrschieber nach Anspruch 1, dadurch gekennzeichnet, daß die Seitenplatte (6) als flache Platte mit einer Stufenbohrung (7) ausgebildet ist.

3. Absperrschieber nach Anspruch 1 oder 2, dadurch gekennzeichnet, daß die Oberflächen von Schieberplatte (2) und/oder Seitenplatten (6) abriebfest beschichtet sind, insbesondere mit Chromnitrid, Titannitrid bzw. Oxidkeramik.

4. Absperrschieber nach Anspruch 1 oder 2, dadurch gekennzeichnet, daß die Schieberplatte (2) und/oder die Seitenplatten (6) aus Keramik bestehen.

5. Absperrschieber nach einem der Ansprüche 1 bis 4, dadurch gekennzeichnet, daß der Dichtring (13) ein O-Ring ist.

6. Absperrschieber nach einem der Ansprüche 1 bis 4, dadurch gekennzeichnet, daß der Dichtring (13) eine Lippenringdichtung ist.

7. Absperrschieber nach einem der Ansprüche 1 bis 6, dadurch gekennzeichnet, daß im Gehäuse (2) parallel zu den Schmalseiten der Schieberplatte (2) umd diese führend zwei Rohre (14) montiert sind.

8. Absperrschieber nach Anspruch 7, dadurch gekennzeichnet, daß eines der Rohre (14) aus dem Gehäuse (1) herausgeführt und mit einer Verschlußschraube abgedichtet ist.

## Claims

1. A shut-off valve for gas pipes, comprising a housing (1), a valve plate (2) with an opening (5), a spindle (3), two side plates (6) with an opening (7), two pipe connections (8) on the housing (1), gas-tight sliding fits between the pipe connections (8) and the side plates (6), and also compression springs (12) which press the side plates (6) on to the valve plate (2), characterised in that a separate sealing connection (9) is inserted between the pipe connections (8) and the side plates (6), and in that an annular groove with a sealing ring (13) is introduced into the surface of the side plates (6) facing the valve plate (2) around the opening (7).

2. A shut-off valve according to Claim 1, characterised in that the side plate (6) is in the form of a flat plate with a stepped bore (7).

3. A shut-off valve according to Claim 1 or 2, characterised in that the surfaces of the valve plate (2) and/or the side plates (6) have an abrasion-resistant coating, in particular chromium nitride, titanium nitride and/or oxide ceramics.

4. A shut-off valve according to Claim 1 or 2, characterised in that the valve plate (2) and/or the side plates (6) consist of ceramic material.

5. A shut-off valve according to any one of Claims 1 to 4, characterised in that the sealing ring (13) is an O-ring.

6. A shut-off valve according to any one of Claims 1 to 4, characterised in that the sealing ring (13) is an annular lip-type seal.

7. A shut-off valve according to any one of Claims 1 to 6, characterised in that two tubes (14) are mounted in the housing (1) parallel to the narrow sides of the valve plate (2) and they guide the latter.

8. A shut-off valve according to Claim 7, characterised in that one of the tubes (14) is directed outside the housing (1) and is sealed by a screw plug.

## Revendications

1. Vanne d'arrêt pour conduites de gaz, comprenant un corps de vanne (1), un tiroir de vanne (2) avec un orifice (5), une tige (3), deux plaques latérales (6) avec ouverture (7), deux conduites de raccordement (8) sur le corps (1), des ajustements appuyés, étanches aux gaz, entre les conduites de raccordement (8) et les plaques latérales (6), ainsi que des ressorts de pression (12) qui appuient les plaques latérales (6) sur le tiroir de vanne (2), caractérisée en ce qu'une tubulure étanche (9) est insérée entre les conduites de raccordement (8) et les plaques latérales (6), et en ce qu'une gorge annulaire pour bague d'étanchéité (13) est pratiquée dans la surface, tournée vers le tiroir de vanne (2), des plaques latérales autour de l'ouverture (7).

2. Vanne d'arrêt selon la revendication 1, caractérisée en ce que la plaque latérale (6) est conçue comme une plaque plane avec un alésage en gradin (7).

3. Vanne d'arrêt selon la revendication 1 ou 2, caractérisée en ce que les surfaces du tiroir de vanne (2) et/ou des plaques latérales (6) sont pourvues d'un revêtement résistant à l'usure, en particulier du nitrure de chrome, du nitrure de titane ou de la céramique oxydée.

4. Vanne d'arrêt selon la revendication 1 ou 2, caractérisée en ce que le tiroir de vanne (2) et/ou les plaques latérales (6) sont en céramique.

5. Vanne d'arrêt selon l'une quelconque des revendications 1 à 4, caractérisée en ce que la bague d'étanchéité (13) est un joint torique.

6. Vanne selon l'une quelconque des revendications 1 à 4, caractérisée en ce que la bague d'étanchéité (13) est un joint à lèvres.

7. Vanne d'arrêt selon l'une quelconque des revendications 1 à 6, caractérisé en ce que deux tuyaux (14) sont montés dans le corps de vanne (1) parallèlement aux bords du tiroir de vanne (2) de manière à les guider.

8. Vanne d'arrêt selon la revendication 7, caractérisée en ce que l'un des tuyaux (14) sort du corps (1) et est obturé par une vis de fermeture.
